# EUROPÄISCHE PATENTANMELDUNG

(11) **EP 1 964 705 A2**
(43) Veröffentlichungstag der Anmeldung: **03.09.2008**
(21) Anmeldenummer: 08002797.2
(22) Anmeldetag: 15.02.2008
(51) Int. Cl.: B60J 7/20

(54) **Haube zum Verschliessen eines Aufnahmeraums in einem Aufbau**

(30) Priorität: 28.02.2007 DE 102007009669
(71) Anmelder: Magna Car Top Systems GmbH, 74321 Bietigheim-Bissingen (DE)
(72) Erfinder: Vogt, Dirk, 70619 Stuttgart (DE)

(57) **Zusammenfassung**

Diese Haube (8) ist zum Verschließen eines Aufnahmeraums (5) in einem Aufbau (3) eines Kraftfahrzeugs (1), insbesondere eines Personenkraftwagens, geeignet, in welchem Aufnahmeraum ein zusammenlegbares Dach (4) und/oder Ladegut unterbringbar sind. Die Haube ist -in Fahrtrichtung gesehen- vorne in eine Dachtransportstellung und hinten in eine Ladegutstellung anhebbar ist, wobei zwischen Aufbau und Haube eine Gestängeeinrichtung (12) vorgesehen ist.

Um diese Haube (8) zu optimieren, umfasst die am Aufbau gelagerte Gestängeeinrichtung eine erste Lenkereinrichtung (13) und eine zweite Lenkereinrichtung (14), wovon wenigstens eine der Lenkereinrichtungen mit einer ersten Verriegelungseinrichtung (15) zusammenarbeitet, die in eine Einrückstellung und eine Ausrückstellung bewegbar ist und dass je nach Ansteuerung der Ausrückstellung bzw. Einrückstellung die Haube in die Dachtransportstellung oder die Ladegutstellung verbringbar ist.

## Beschreibung

Die Erfindung bezieht sich auf eine Haube zum Verschließen eines Aufnahmeraums in einem Aufbau eines Kraftfahrzeugs, insbesondere eines Personenkraftwagen, nach dem Oberbegriff des Patentanspruchs 1.

Es ist ein Kraftfahrzeug mit einem zusammenlegbaren Dach bekannt, EP 0 949 104 A1, das zwischen einer Schließstellung und einer Offenstellung bewegbar ist. In der Offenstellung ist das Dach in einem Kofferraum untergebracht, der mittels einer Haube abgedeckt wird. Wird das Dach abgelegt, schwenkt die Haube um eine im rückwärtigen Bereich des Kraftfahrzeugs angeordnete Schwenkachse, und sie wird dazu vorne angehoben. Zum Be- und Entladen von Gepäckstücken wird die Haube hinten angehoben und wird unter Vermittlung einer Schwenkachse verstellt, die benachbart einer Rückseite des geschlossenen Dachs verläuft.

Aus der DE 699 00 921 T2 geht ein Cabrio-Fahrzeug hervor, das ein in einem Aufbewahrungsraum eines Aufbaus unterbringbares Faltdach umfasst. Der Aufbewahrungsraum ist mittels eines Deckels verschließbar, der mittels Vorrichtungen in eine Schließ- und eine Offenstellung bewegbar ist. Diese Vorrichtungen sind so gestaltet, dass der Deckel in Stellungen bewegbar ist, die einerseits das Ablegen des Faltdachs und andererseits Zugang zum Aufbewahrungsraum von der Fahrzeugrückseite aus ermöglichen.

In der DE 44 45 944 C1 wird ein Hardtop-Fahrzeug behandelt, das mit einer ein Dachteil und ein Rückfensterteil aufweisenden Dachkonstruktion versehen ist. Das Dachteil und das Rückfensterteil sind in eine zusammengeklappte Position verbringbar, in der diese in einem Stauraum ruhen. Den Stauraum umgibt ein Heckdeckel, der in der Weise angelenkt ist, dass er vorne zur Bewegung des Dachteils und des Rückfensterteils und hinten zur Be- und Entladung von Transportgut anhebbar ist. Es ist Aufgabe der Erfindung, eine Haube für einen mit einem zusammenlegbaren Dach versehenen Personenkraftwagen zu gestalten, die zwischen einer Grundstellung, einer Dachtransportstellung und einer Ladegutstellung funktionsgerecht verstellbar ist. Dabei sollte aber auch sichergestellt sein, dass die hierzu eingesetzten Vorkehrungen mit vertretbarem Aufwand realisierbar und wirtschaftlich günstig herstellbar sind.

Erfindungsgemäß wird diese Aufgabe durch die Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, dass über die erste und zweite Lenkereinrichtung sowie die erste Verriegelungseinrichtung die Haube bei guter Funktion in die Dachtransportstellung und in die Ladegutstellung verbringbar ist. Die Lenkereinrichtungen und die Verriegelungseinrichtung sind als Mehrgelenksysteme ausgeführt, die aufwandsarm und mit konstruktiven Freiheitsgraden bei der Entwicklung des Personenkraftwagens verwirklicht werden können. Die Verriegelungseinrichtung ist dank des Sperrhebels betriebssicher, der im Übrigen ein einfach herstellbares Bauteil darstellt. Die Betätigungseinrichtung zwischen Sperrhebel und Steuerhebel ist mit Einsatz übersichtlicher Mittel integrierbar und funktionseffizient. Sinngemäß trifft dies auch für das als Steuerkonsole ausgeführte Steuerorgan und die zweite Verriegelungseinrichtung mit der Aufnahme und dem Sperrzapfen zu.

In der Zeichnung wird ein Ausführungsbeispiel der Erfindung gezeigt, das nachstehend näher beschrieben wird.

Es zeigen
Fig. 1 eine schematische Seitenansicht eines Personenkraftwagens,
Fig. 2 eine Einzelheit der Fig. 1 in größerem Maßstab mit einer Haube und einer Gestängeeinrichtung nach der Erfindung,
Fig. 3 eine Ansicht entsprechend Fig. 2 mit einer Zwischenstellung der Gestängeeinrichtung,
Fig. 4 eine Seitenansicht der Haube in einer Dachtransportstellung,
Fig. 5 eine Ansicht entsprechend Fig. 4, jedoch die Haube in einer Ladegutstellung.

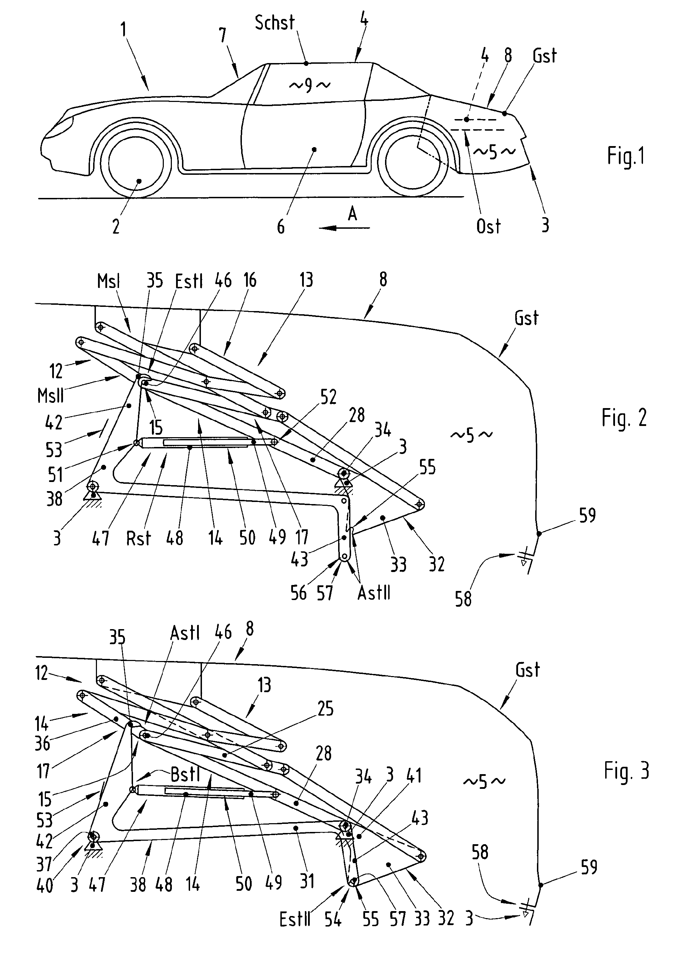

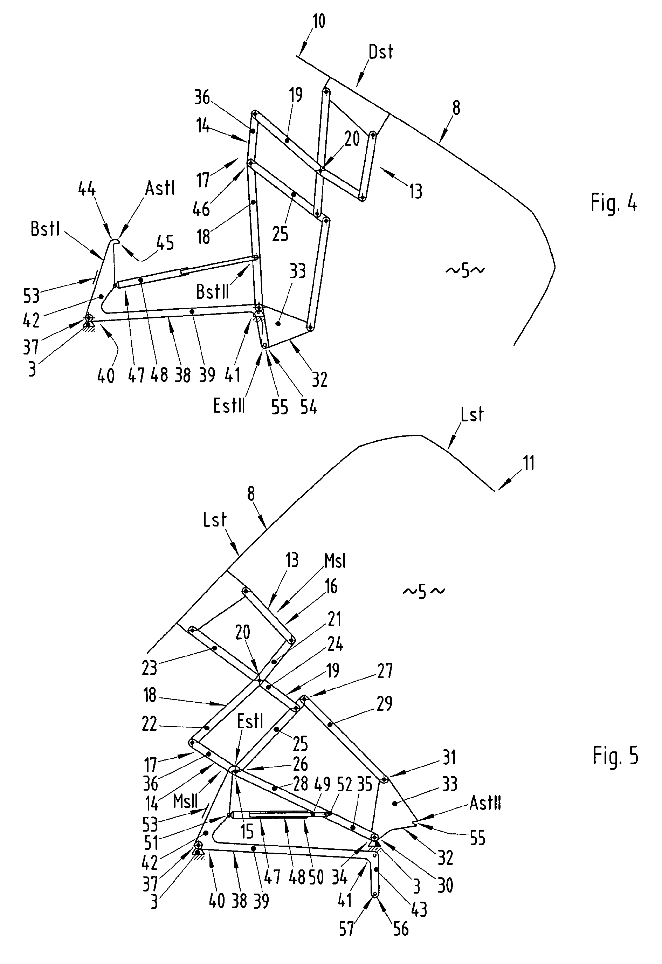

Ein Personenkraftwagen 1 weist einen von Rädern 2 getragenen Aufbau 3 mit einem zusammenlegbaren Dach 4 auf, das zwischen einer Schließstellung Schst und einer Offenstellung Ost verstellbar und in einem Aufnahmeraum 5 des Türen 6 und eine Windschutzscheibe 7 besitzenden Aufbaus 3 ablegbar ist. Der Aufnahmeraum 5 ist mittels einer aus einer Grundstellung Gst -Fig. 1 bis 3- heraus beweglichen Haube 8 abgedeckt, die -in Fahrtrichtung A gesehen- hinter einem Fahrgastraum 9 angeordnet ist. Die Haube 8 ist vorne bei 10 in eine Dachtransportstellung Dst -Fig. 4- anhebbar, dergestalt, dass das Dach 4 aus der Schließstellung Schst in die Offenstellung Ost bewegt wird und vice versa. Zusätzlich ist die Haube 8 hinten bei 11 anhebbar, und zwar in eine Ladegutstellung Lst -Fig. 5-, in der der Aufnahmeraum 5 zum Be- und Entladen von Gegenständen -bspw. Gepäck- entsprechend geöffnet ist.

Zwischen Aufbau 3 und Haube 8 ist eine Gestängeeinrichtung 12 wirksam, über die die besagte Haube 8 in die Dachtransportstellung Dst bzw. Ladegutstellung Lst bewegbar ist. Die Gestängeeinrichtung 12 umfasst eine erste Lenkereinrichtung 13 und eine zweite Lenkereinrichtung 14, wobei wenigstens eine der Lenkereinrichtungen 13 oder 14 vorzugsweise die zweite Lenkereinrichtung 14 mit einer ersten Verriegelungseinrichtung 15 zusammenarbeitet. Die erste Verriegelungseinrichtung 15 ist in eine Einrückstellung Estl und in eine Ausrückstellung Astl steuerbar. Je nach Ansteuerung der Einrückstellung Estl -Fig.2 und 5- bzw. der Ausrückstellung Astl -Fig. 3 und 4- ist die Haube 8 in die Dachtransportstellung Dst bzw. die Ladegutstellung Lst bewegbar. Die erste Lenkereinrichtung 13 und die zweite Lenkereinrichtung 14 sind miteinander gekoppelt und als Mehrgelenksysteme Msl und Msll ausgebildet, wobei besagte Lenkereinrichtungen 13 und 14 als erste und zweite Viergelenkvorrichtungen 16 und 17 dargestellt sind. Zwischen der ersten Lenkereinrichtung 13 und der zweiten Lenkereinrichtung 14 sind ein erster Verbindungslenker 18 und ein zweiter Verbindungslenker 19 -Fig. 5- wirksam, die eine gemeinsame Drehachse 20 einschließen. Der erste Verbindungslenker 18 ist in der Weise ausgeführt, dass er mit einem ersten Lenkerabschnitt 21 einen Lenkerteil der ersten Viergelenkvorrichtung 16 und mit einem zweiten Lenkerabschnitt 22 der zweiten Viergelenkvorrichtung 17 bildet. Dagegen ergänzt der zweite Verbindungslenker 19 mit einem ersten Lenkerabschnitt 23 die erste Viergelenkvorrichtung 16 und mit einem zweiten Lenkerabschnitt 24 die zweite Viergelenkvorrichtung 17.

An einem Lenker 25 der zweiten Viergelenkvorrichtung 17 greifen erste und zweite Enden 26 und 27 von zwei mit Abstand zu einander angeordneten ersten und zweiten Steuerlenkern 28 und 29 an, deren dritte und vierte Enden 30 und 31 an einem Steuerorgan 32 gelagert sind. Letzteres ist als Steuerkonsole 33 ausgebildet, die mittels einer Schwenkachse 34 am Aufbau 3 angelenkt ist. Der erste Steuerlenker 28 ist eine Verlängerung 35 eines Lenkers 36 der zweiten Viergelenkvorrichtung 17, welcher erste Steuerlenker 28 mit seinem dritten Ende 30 an der Schwenkachse 34 angelenkt ist.

Die erste Verriegelungseinrichtung 15, bewegbar zwischen Einrückstellung Est und Ausrückstellung Ast, umfasst einen unter Zwischenschaltung eines Drehlagers 37 schwenkbar am Aufbau 3 gelagerten Sperrhebel 38. Der Sperrhebel 38 ist mit einem etwa horizontal ausgerichteten geraden Trägerabschnitt 39 versehen, an dessen Endabschnitten 40 und 41 jeweils ein Winkel mit besagtem Trägerabschnitt einschließende Hebelabschnitte 42 und 43 vorgesehen sind, die sich in entgegen- gesetzten Richtungen erstrecken. So verläuft der Hebelabschnitt 42 zur zweiten Viergelenkeinrichtung 17 hin, wogegen der Hebelabschnitt 43 sich auf der von der Viergelenkeinrichtung 17 abgekehrten Seite erstreckt. Der Sperrhebel 38 der ersten Verriegelungseinrichtung 15 besitzt auf einer freien Seite 44 einen Sperrhaken 45, der mit einem Gelenklager 46 zusammenarbeitet. Das Gelenklager 46 dient zur Kopplung der Lenker 25 und 36.

Der Sperrhebel 38 ist mittels einer Betätigungseinrichtung 47 beeinflussbar, die durch einen Betätigungszylinder 48, aufweisend eine Kolbenstange 49 und ein Gehäuse 50, gebildet wird. Der Betätigungszylinder 48 ist einerseits am Sperrhebel 38 und andererseits am ersten Steuerlenker 28 mittels Gelenken 51 und 52 angeordnet. Darüber hinaus ist der Betätigungszylinder aus einer Ruhestellung Rst -Fig. 2- in eine erste Betriebsstellung Bstl und eine zweite Betriebsstellung Bstll bewegbar. Die Bewegung des Sperrhebels 38 -für die Betriebsstellung Bstl- wird durch einen festen Anschlag 53 begrenzt, der mit dem Hebelabschnitt 42 des Sperrhebels 38 zusammenwirkt und auf der vom Betätigungszylinder 48 abgekehrten Seite angebracht ist.
Zwischen Steuerkonsole 33 und Sperrhebel 38 ist eine zweite Verriegelungseinrichtung 54 wirksam, wobei mit dem Sperrhebel 38 die Steuerkonsole 33 festlegbar ist. Hierbei besteht die Möglichkeit, die Verriegelungseinrichtung 54 in eine Einrückstellung Estll und eine Ausrückstellung Astll zu bewegen. Im Ausführungsbeispiel sind die Steuerkonsole 33 mit einer gabelförmigen Aufnahme 55 und der Hebelabschnitt 43 an einem freien Ende 56 mit einem Sperrzapfen 57 versehen.

Wird eine Bewegung der Haube 8 in die Dachtransportstellung Dst oder die Ladegutstellung Lst gewünscht, erfolgt dies in folgenden Schritten:

### Dachtransportstellung Dst:

In der Grundstellung Gst ist die Haube 8 geschlossen und die erste Verriegelungseinrichtung 15 befindet sich in der Einrückstellung Estl, wobei die zweite Verriegelungseinrichtung 54 die Ausrückstellung Astll einnimmt. Durch Druckbeaufschlagung der Betätigungseinrichtung 47 wird der Hebelabschnitt 42 gegen den Anschlag 54 bewegt und die zweite Verriegelungseinrichtung 54 in die Einrückstellung EstII verstellt. Unter diesen Voraussetzungen wird die Haube 8 mittels der Betätigungseinrichtung 47 in die Dachtransportstellung Dst bewegt.

### Ladegutstellung Lst:

In der Grundstellung Gst ist die Haube 8 mittels eines prinzipiell dargestellten Schlosses 58 im Bereich einer Rückwand 59 der Haube 8 bzw. des Aufbaus 3 geschlossen und die erste Verriegelungseinrichtung 15 befindet sich in der Einrückstellung Estl, wobei die Verriegelungseinrichtung 54 die Ausrückstellung Astll einnimmt. Nach manuellem oder motorischem Öffnen des Schlosses 58 ist die Haube bei 11 so lange motorisch und/oder manuell anhebbar bis sie die Ladegutstellung Lst einnimmt.

## Patentansprüche

1. Haube zum Verschließen eines Aufnahmeraums in einem Aufbau eines Kraftfahrzeugs, insbesondere eines Personenkraftwagens, in dem ein zusammenlegbares Dach und/oder Ladegut unterbringbar sind, welche Haube -in Fahrtrichtung gesehen- vorne in eine Dachtransportstellung und hinten in eine Ladegutstellung anhebbar ist, wobei zwischen Aufbau und Haube eine Gestängeeinrichtung vorgesehen ist, **dadurch gekennzeichnet, dass** die am Aufbau (3) gelagerte Gestängeeinrichtung (12) eine erste Lenkereinrichtung (13) und eine zweite Lenkereinrichtung (14) umfasst, wovon wenigstens eine der Lenkereinrichtungen (13 oder 14) mit einer ersten Verriegelungseinrichtung (15) zusammenarbeitet, die in eine Einrückstellung (Est) und eine Ausrückstellung (Ast) bewegbar ist und dass je nach Ansteuerung der Ausrückstellung (Ast) bzw. Einrückstellung (Est) die Haube (8) in die Dachtransportstellung (Dst) oder die Ladegutstellung (Lst) verbringbar ist.

2. Haube nach Anspruch 1, **dadurch gekennzeichnet, dass** die erste Lenkereinrichtung (13) und die zweite Lenkereinrichtung (14) durch Mehrgelenksysteme (MsI und MsII) gebildet werden und miteinander gekoppelt sind.

3. Haube nach den Ansprüchen 1 und 2, **dadurch gekennzeichnet, dass** die erste Lenkereinrichtung (13) und die zweite Lenkereinrichtung (14) durch gekoppelte erste und zweite Viergelenkvorrichtungen (16 und 17) gebildet werden.

4. Haube nach Anspruch 3, **dadurch gekennzeichnet, dass** zwischen der ersten Lenkerreinrichtung (13) und der zweiten Lenkereinrichtung (14) ein erster Verbindungslenker (18) und ein zweiter Verbindungslenker (19) wirksam ist, welche Verbindungslenker (18 und 19) an einer gemeinsamen Drehachse (20) gelagert sind.

5. Haube nach Anspruch 4, **dadurch gekennzeichnet, dass** der erste Verbindungslenker (18) mit einem ersten Lenkerabschnitt (21) einen Lenkerteil der ersten Viergelenkvorrichtung (16) und mit einem zweiten Lenkerabschnitt (22) einen Lenkerteil der zweiten Viergelenkvorrichtung (17) bildet.

6. Haube nach Anspruch 4, **dadurch gekennzeichnet, dass** der zweite Verbindungslenker (18) mit einem ersten Lenkerabschnitt (23) einen Lenkerteil der ersten Viergelenkvorrichtung (16) und mit einem zweiten Lenkerabschnitt (24) einen Lenkerteil der zweiten Viergelenkvorrichtung (17) bildet.

7. Haube nach einem oder mehreren der vorangehenden Ansprüche, **dadurch gekennzeichnet, dass** an einem Lenker (25) der zweiten Viergelenkvorrichtung (17) erste und zweite Enden (26 und 27) von zwei beabstandeten ersten und zweiten Steuerlenkern (28 und 29) angreifen, deren dritte und vierte Enden (30 und 31) an einem Steuerorgan (32) angelenkt sind.

8. Haube nach Anspruch 7, **dadurch gekennzeichnet, dass** das Steuerorgan (32) durch eine Steuerkonsole (34) gebildet wird.

9. Haube nach Anspruch 7, **dadurch gekennzeichnet, dass** der erste Steuerlenker (28) eine Verlängerung (35) eines Lenkers (36) der zweiten Viergelenkvorrichtung (17) bildet.

10. Haube nach den Ansprüchen 1 und 8, **dadurch gekennzeichnet, dass** die Steuerkonsole (33) am Aufbau (3) schwenkbar an einer Schwenkachse (34) angelenkt ist.

11. Haube nach einem oder mehreren der vorangehenden Ansprüche, **dadurch gekennzeichnet, dass** die erste Verriegelungsvorrichtung (15) einen unter Zwischenschaltung eines Drehlagers (37) schwenkbar am Aufbau (3) befestigten Sperrhebel (38) umfasst.

12. Haube nach den Ansprüchen 10 und 11, **dadurch gekennzeichnet, dass** die Steuerkonsole (33) unter Vermittlung einer zweiten Verriegelungseinrichtung (54) mit dem Sperrhebel (38) festlegbar ist.

13. Haube nach Anspruch 12, **dadurch gekennzeichnet, dass** die zweite Verriegelungseinrichtung (54) eine gabelförmige Aufnahme (55) und einen Sperrzapfen (57) aufweist, mit denen die Steuerkonsole (33) in der Einrückstellung (Estll) verriegelt und in der Ausrückstellung (Estll) entriegelt wird.

14. Haube nach Anspruch 11, **dadurch gekennzeichnet, dass** der Sperrhebel (38) mit einer Betätigungseinrichtung (47) zusammenarbeitet.

15. Haube nach Anspruch 14, **dadurch gekennzeichnet, dass** die Betätigungseinrichtung (47) durch einen Betätigungszylinder (48) gebildet wird.

16. Haube nach Anspruch 15, **dadurch gekennzeichnet, dass** der Betätigungszylinder (48) zwischen Sperrhebel (38) und erstem Steuerlenker (28) wirksam ist.

17. Haube nach Anspruch 1, **dadurch gekennzeichnet, dass** der Sperrhebel (38) an einem Gelenklager (46) der zweiten Viergelenkvorrichtung (17) angreift.

18. Haube nach Anspruch 17, **dadurch gekennzeichnet, dass** der Sperrhebel (38) einen Sperrhaken (45) aufweist, der mit dem Gelenklager (46) zusammenwirkt.

19. Haube nach den Ansprüchen 15 und 16, **dadurch gekennzeichnet, dass** bei Bewegung der Betätigungseinrichtung (47) in eine erste Betätigungsstellung (Bstl) der Sperrhebel (38) sich an einem Anschlag (53) abstützt.

20. Verfahren zur Betätigung der Haube nach einem oder mehreren der vorangehenden Ansprüche, **dadurch gekennzeichnet, dass** zur Verstellung der Haube (8) in die Dachtransportstellung (Dst) nachstehende Schritte erfolgen:
(I) die erste Verriegelungsvorrichtung (15) wird entriegelt und der Sperrhebel (38) wird mittels dem in die erste Betätigungsstellung (Bst) bewegten Betätigungszylinder (48) an dem Anschlag (53) zur Anlage gebracht;
(II) der Betätigungszylinder (48) wird in eine zweite Betätigungsstellung (BstII) verstellt;
(III) die zweite Verriegelungsvorrichtung (54) wird in die Einrückstellung (Estll) bewegt und die Haube (8) nimmt im verriegelten Zustand der zweiten Verriegelungsvorrichtung (54) die Dachtransportstellung (Dst) ein.

21. Verfahren zur Betätigung der Haube nach einem oder mehreren der vorangehenden Ansprüche, **dadurch gekennzeichnet, dass** zur Verstellung der Haube (8) in die Ladegutstellung (Lst) nachstehende Schritte erfolgen:
(I) ein Schloss (58) der Haube (8) wird geöffnet;
(II) die erste Verriegelungseinrichtung (15) wird geschlossen;
(III) die zweite Verriegelungseinrichtung (54) wird entriegelt;
(IV) die Haube (8) wird in die Ladegutstellung (Lst) verbracht.
